(19) Europäisches Patentamt
European Patent Office
Office européen des brevets

(11) **EP 1 764 853 A1**

(12) **EUROPEAN PATENT APPLICATION**

(43) Date of publication:
**21.03.2007 Bulletin 2007/12**

(51) Int Cl.:
**H01M 4/24** $^{(2006.01)}$   **C22C 28/00** $^{(2006.01)}$

(21) Application number: **06120648.8**

(22) Date of filing: **14.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.09.2005 JP 2005272742**
**11.07.2006 JP 2006190750**

(71) Applicant: **KABUSHIKI KAISHA TOYOTA JIDOSHOKKI**
**Kariya-shi, Aichi 448-8671 (JP)**

(72) Inventors:
• **Miyoshi, Manabu**
**Kariya-shi,**
**Aichi 448-8671 (JP)**

• **Kinoshita, Kyoichi**
**Kariya-shi,**
**Aichi 448-8671 (JP)**
• **Aoki, Masakazu**
**Nagakute-cho**
**Aichi-gun,**
**Aichi 480-1192 (JP)**
• **Oba, Nobuko**
**Nagakute-cho**
**Aichi-gun,**
**Aichi 480-1192 (JP)**
• **Noritake, Tatsuo**
**Nagakute-cho**
**Aichi-gun,**
**Aichi 480-1192 (JP)**

(74) Representative: **TBK-Patent**
**Bavariaring 4-6**
**80336 München (DE)**

(54) **Hydrogen storage alloy**

(57) A hydrogen storage alloy includes a $(Ca_{1-n}Sr_n)Si$ alloy, in which the Sr atoms substitute for a part of the Ca atoms of CaSi alloy whose atomic ratio of Ca to Si is 1 : 1, and whose value "n" falls in a range of $0 < n \leqq 0.5$.

## Fig.1

**Description**

BACKGROUND OF THE INVENTION

Field of the Invention

The present invention relates to a hydrogen storage alloy which can absorb and discharge hydrogen reversibly.

Description of the Related Art

In view of the environmental problems, such as the global warming due to the carbon dioxide emission, and the energy problems, such as the depletion of fossil fuel, a hydrogen energy has been attracting engineer's attention as a clean alternative energy recently. In order to employ hydrogen as an energy, it has been required to develop technologies for storing and transporting hydrogen safely. Carbon materials, such as activated carbons, fullerenes and carbon nanotubes, and hydrogen storage alloys have been developed as hydrogen storage materials which can store hydrogen. Among them, hydrogen storage alloys have been expected particularly to be new transportable storage media because they can absorb hydrogen as metallic hydrides in the form of solid under predetermined conditions, and can discharge it under another conditions.

Many alloys have been known as hydrogen storage alloys, which can absorb and discharge hydrogen. For example, it is possible to name $LaNi_5$ having a hexagonal system $CaCu_5$ type crystal structure, and TiFe having a cubic system CsCl type crystal structure. In addition to these, Japanese Unexamined Patent Publication (KOKAI) No. 10-8,180 discloses $CaSi_n$ having a hexagonal system C12 type crystal structure. However, since $LaNi_5$ and TiFe include rare metals such as La, Ni and Ti, they are associated with the problem that they themselves are heavy hydrogen storage alloys. On the other hand, since $CaSi_n$ is abundant resourcefully so that it can be procured with ease, and since it is lightweight, it can be put on vehicles, such as electric automobiles, advantageously. However, it is difficult for $CaSi_n$ to absorb hydrogen at around room temperature. In addition, $CaSi_n$ also exhibits a small hydrogen absorption.

Moreover, Japanese Unexamined Patent Publication (KOKAI) No. 2004-176,089 discloses a hydrogen storage alloy, which is expressed by a composition formula, $(Ca_{1-x}A_x)(Si_{1-y}B_y)$, wherein: a part of CaSi, in which the atomic ratio of Ca to Si is 1 : 1, is replaced by the other atoms. Specifically, it discloses that $(Ca_{1-x}La_x)Si$, which has a CrB type crystal structure and in which "x" is $0 < x \leq 0.24$, $(Ca_{1-x}La_x)Si$, which has an FeB type crystal structure and in which "x" is $0.05 \leq x \leq 0.41$, and $Ca(Si_{1-y}Ni_y)$, which has a CrB type crystal structure and in which "y" is $0.34 \leq y \leq 0.73$, can absorb and discharge hydrogen at around room temperature.

SUMMARY OF THE INVENTION

The present invention has been developed in view of the aforementioned problems. It is therefore an object of the present invention to provide a noble hydrogen storage alloy, which can absorb and discharge hydrogen at relatively low temperatures.

A hydrogen storage alloy according to the present invention is expressed by $(Ca_{1-n}Sr_n)$ Si wherein:

$$\text{``n'' falls in a range of } 0 < n \leq 0.5.$$

Further, the present hydrogen storage alloy is expressed by $(Ca_{1-n}Sr_n)Si$, and "n" can preferably fall in a range of $0 < n < 0.25$. Furthermore, the present hydrogen storage alloy is expressed by $(Ca_{1-n}Sr_n)Si$, and "n" can preferably fall in a range of $0.125 \leq n \leq 0.5$. Moreover, the present hydrogen storage alloy is expressed by $(Ca_{1-n}Sr_n)Si$, and "n" can preferably fall in a range of $0.125 \leq n \leq 0.25$.

The present hydrogen storage alloy is expressed by $(Ca_{1-n}Sr_n)Si$, that is, a CaSi alloy in which an atomic ratio of Ca to Si is 1 : 1 and in which Sr atoms substitute for a part of Ca atoms. In a CaSi alloy, since Ca atom is likely to form oxides, the resulting oxide films, which are formed on the alloy surface, might impair the hydrogenation of the CaSi alloy. On the other hand, an Sr atom exhibits a large rate of reaction to hydrogen. Therefore, when Sr atoms substitute for a part of the Ca sites in the CaSi alloy, the hydrogenation of the present hydrogen storage alloy is facilitated so that it comes to exhibit an increased hydrogen absorbing rate.

When "n" falls in a range of $0 < n \leq 0.5$ in the present hydrogen storage alloy expressed by $(Ca_{1-n}Sr_n)Si$, the resulting present hydrogen storage alloy exhibits a larger hydrogen absorption than that of CaSi, and accordingly can absorb and discharge hydrogen at lower temperatures than CaSi does. Moreover, when "n" falls in a range of $0 < n \leq 0.25$, the resultant present hydrogen storage alloy exhibits a larger hydrogen absorption than that of CaSi, and consequently makes a hydrogen storage alloy which is usable at around room temperature. In this instance, when "n" is 0.125 or more, that is, $0.125 \leqq n$, the resulting present hydrogen storage alloy demonstrates the advantages, which results from the substitution Sr atoms for Ca atoms, satisfactorily so that it makes a hydrogen storage alloy, which exhibits good hydrogen absorbing-and-discharging ability.

Moreover, the present hydrogen storage alloy, which is expressed by $(Ca_{1-n}Sr_n)Si$ and whose value "n" falls in one of the aforementioned ranges, absorbs hydrogen by means of a two-stage reaction, the two-stage reaction comprising:

a first reaction of generating a first hydride by means of a reaction of the hydrogen storage alloy with hydrogen; and
a second reaction of generating a second hydride by means of a reaction of the first hydride with hydrogen.

BRIEF DESCRIPTION OF THE DRAWING

A more complete appreciation of the present invention and many of its advantages will be readily obtained as the same becomes better understood by reference to the following detailed description when considered in connection with the accompanying drawing and detailed specification, all of which forms a part of the disclosure.

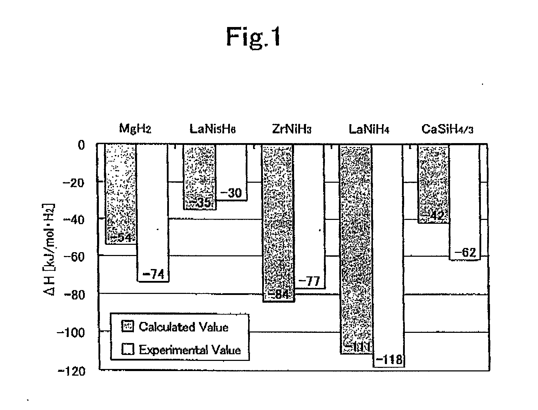

Fig. 1 is a graph for comparing the calculated values of the heat of hydride formation $\Delta H$ for hydrides with the experimental values.

DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

As described above, the present hydrogen storage alloy comprises a $(Ca_{1-n}Sr_n)Si$ alloy in which the Sr atoms substitute for a part of the Ca atoms of CaSi alloy whose atomic ratio of Ca to Si is 1 : 1. Note that $(Ca_{1-n}Sr_n)Si$ takes either one of a CrB type crystal structure and an FeB type crystal structure, depending on the compositions. Hence, the crystal structure of the present hydrogen storage alloy depends on the value "n" in the composition formula, $(Ca_{1-n}Sr_n)Si$.

Note that, in the present specification, stablest hydrides are determined by means of a first principle calculation. By means of a first principle calculation, it is possible to determine the crystal structure and electron state of substances, without referring to experimental values. Therefore, by means of a fist principle calculation, it is possible to determine the crystal structure and its energy, which depend on the values "n" and "$\delta$," with good accuracy for hydrides, $(Ca_{1-n}"Sr_n)SiH_\delta$. For example, Fig. 1 illustrates the calculated values, which were found by means of a first principle calculation, and experimental values of the heat of hydride formation $\Delta H$ for various hydrides. In $MgH_2$, $LaNi_5H_6$-$ZrNiH_3$, $LaNiH_4$ and $CaSiH_{4/3}$, the difference between the calculate value and the experimental value was 20 kJ/mol $H_2$ at the maximum. Therefore, the $\Delta H$ values, which are obtained by means of a first principle calculation, hardly differ from the experimental values greatly.

Moreover, when actually reacting a CaSi alloy with hydrogen at a hydrogen absorbing-and-discharing temperature of 200 °C, the CaSi alloy exhibited the heat of hydride formation $\Delta H$ of -62 kJ/mol $H_2$, and showed a hydrogen absorption of 1.9% by weight. On the other hand, according to a first principle calculation, the heat of hydride formation $\Delta H$ was found to be -42 kJ/mol $H_2$ for $CaSiH_{4/3}$. Accordingly, $CaSiH_{4/3}$ is stabler than CaSiH whose calculated value of the heat of hydride formation $\Delta H$ was found to be -27 kJ/mol $H_2$. Moreover, $CaSiH_{4/3}$ exhibited a hydrogen absorption of 1.9% by weight. Therefore, it is possible to say that the calculated values and the experimental values agree with each other substantially, and that the stablest hydride of CaSi alloy is $CaSiH_{4/3}$. In addition, $Ca(Si_{0.75}Al_{0.25})H_{1.5}$, one of the hydrides of a $Ca(Si_{0.75}Al_{0.25})$ alloy, in which Al atoms substituted for a part of the Si atoms of CaSi alloy, exhibited the heat of hydride formation $\Delta H$ of -56 kJ/mol $H_2$ according to a first principle calculation, and showed a hydrogen absorption of 2.2% by weight. Since the heat of hydride formation $\Delta H$ for $Ca(Si_{0.75}Al_{0.25})H_{1.5}$ alloy, which was obtained by the calculation, was smaller than the calculated values of the heat of hydride formation $\Delta H$ for $CaSiH_{4/3}$ and CaSiH alloys, or since the absolute value of the former was larger than the absolute value of the latter, it was predicted that $Ca(Si_{0.75}Al_{0.25})H_{1.5}$ would exhibit a hydrogen absorbing-and-discharging temperature of higher than 200 °C. In view of the fact, when reacting a $Ca(Si_{0.75}Al_{0.25})$ alloy with hydrogen, the $Ca(Si_{0.75}Al_{0.25})$ alloy showed a hydrogen absorbing-and-discharging temperature of 300 °C Consequently, in substituted CaSi alloys as well, it is possible to say that the experimental values and the calculated values agree with each other substantially. Note that, according to the hydrogen absorbing-and-discharging experiment carried out at 300 °C, the $Ca(Si_{0.75}Al_{0.25})$ alloy showed a hydrogen absorption of 2.0% by weight. Since it is believed that the difference, 0.2% by weight, between the experimental value, 2.0%, and the calculated value, 2.2% by weight, resulted from the fact that impurity phases, whose compositions differed from the target composition, were formed during the production process of the alloy, it is possible to say that the experimental values and the calculated values agree with each other substantially with regard to the hydrogen absorption, too.

As having described above already, it has been known for certain that CaSi having a CrB type structure forms $CaSiH_{4/3}$ as a stable hydride, according to a first principle calculation. The stability of hydride can be judged by the heat of hydride formation $\Delta H$. When the heat of hydride formation $\Delta H$ falls in a range of from -41 to 21 kJ/mol $H_2$ under a hydrogen dissociation pressure of from 0.1 to 350 atm, it is believed possible to absorb and discharge hydrogen at room temperature. As described above, $CaSiH_{1/3}$ exhibits the heat of hydride formation $\Delta H$ of -42 kJ/mol $H_2$. On the other hand, the present hydrogen storage alloy is likely to form hydrides, because Sr atoms, which show a large rate of reaction to hydrogen, substitute for a part of the Ca atoms of CaSi alloy. Since the calculated heat of hydride formation $\Delta H$ for the present hydrogen storage alloy is larger than the heat of hydride formation $\Delta H$ for $CaSiH_{4/3}$ or since the absolute value of the former is smaller than the absolute value of the latter, the present hydrogen storage alloy can absorb and discharge hydrogen at low temperatures relatively.

However, $(Ca_{1-n}Sr_n)Si$, in which "n" is more than 0, that is, $0 < n$, exhibits a less hydrogen absorption, and shows the smaller heat of hydride formation $\Delta H$ or the larger absolute value thereof, when the value "n" is larger, that is, Sr atoms substitutes more for Ca atoms. Specifically, the hydrogen absorbing-and-discharging temperature of $(Ca_{1-n}Sr_n)Si$ tends to rise as the value "n" becomes larger. Hence, in the present hydrogen storage alloy, the value "n" in $(Ca_{1-n}Sr_n)Si$ is controlled to fall in a range of $0 < n \leqq 0.5$. When the value "n" is 0.5 or less, the present hydrogen storage alloy makes a hydrogen storage alloy of good hydrogen absorbing-and-discharging ability, which exhibits a larger hydrogen absorption than that of CaSi and shows an adequate heat of hydride formation $\Delta H$ for absorbing and discharging hydrogen. On the other hand, when the value "n" is 0.25 or less, the present hydrogen storage alloy makes a hydrogen storage alloy whose hydrogen absorption is much larger than that of CaSi and which is usable at around room temperature. Therefore, the value "n" can preferably fall in a range of $0 < n \leqq 0.25$.

In the present hydrogen storage alloy, the value "n" in the composition formula, $(Ca_{1-n}Sr_n)Si$, can be more than 0, that is, $0 < n$. However, when the value "n" in $(Ca_{1-n}Sr_n)$ Si is small excessively, the substituting Sr atoms do not produce the advantages so greatly that the properties of the resulting $(Ca_{1-n}Sr_n)$ Si approach to those of CaSi. When the value "n" in $(Ca_{1-n}Sr_n)$ Si is 0.125 or more, that is, $0.125 \leqq n$, it is more preferable because the substituting Sr atoms demonstrate the advantages more greatly. Specifically, the value "n" in $(Ca_{1-n}Sr_n)$ Si can further preferably fall in a range of $0.125 \leqq n \leqq 0.5$, furthermore preferably in a range of $0.125 \leqq n \leqq 0.25$.

A hydrogen storage alloy reacts with hydrogen to absorb hydrogen at a predetermined temperature under a predetermined pressure. However, note that, in the present hydrogen storage alloy, the hydrogen absorbing reaction occurs in a two-stage reaction. specifically, the present hydrogen storage alloy, which is expressed by a composition formula, $(Ca_{1-n}Sr_n)Si$, wherein: "n" falls in a range of $0 < n \leqq 0.5$, absorbs hydrogen by means a two-stage reaction, which comprises: a first reaction of generating a first hydride by means of a reaction of the present hydrogen storage alloy with hydrogen; and a second reaction of generating a second hydride by means of a reaction of the first hydride with hydrogen. Accordingly, in the pressure-composition isothermal curve (i.e., PCT curve) of the hydrogen absorbing reaction according to the present hydrogen storage alloy, a two-stage plateau appears. Specifically, in the first stage, the most stable hydrogen absorbing sites of the present hydrogen storage alloy absorb hydrogen to form a first hydride. Then, in the second stage, the secondarily stable hydrogen absorbing sites of the present hydrogen storage alloy absorb hydrogen to form a second hydride. Although the second hydride is unstabler than the first hydride, the second hydride generates under such a high-pressure condition that the reaction pressure is increased higher than that of the first reaction. Consequently, the present hydrogen storage alloy can absorb hydrogen in a much lager amount, because the present hydrogen storage alloy reacts with hydrogen up to the second reaction.

A production method for the present hydrogen storage alloy is not limited in particular. Since an Sr atom is an homologous atom with a Ca atom, it has properties similar to those of Ca atom. Accordingly, it is not difficult greatly to produce $(Ca_{1-n}Sr_n)$ Si. For example, powders or bulky meltable raw materials, which include Ca, Si and Sr, can be prepared to a desirable overall composition, and can be melted to produce $(Ca_{1-n}Sr_n)Si$. in this instance, Sr atoms substitute for Ca atoms with a desirable substitution proportion "n" depending On the overall composition in the raw material. Consequently, the present hydrogen storage alloy, which comprises a $(Ca_{1-n}Sr_n)Si$ single phase, can be produced.

The specific embodiments according to the present hydrogen storage alloy have been described so far. Note, however, that the present hydrogen storage alloy is not limited to the above-described specific embodiments. It will be possible for one of ordinary skill in the art to carry out the present hydrogen storage alloy in various modes provided with such changes and modifications that he or she can think of without departing from the spirit or scope of the present invention.

(Calculation of Hydride-formation Heat and Hydrogen Absorption)

For $(Ca_{1-n}Sr_n)$ Si, hydrides, which are stable in the following hydrogen absorbing reaction, were determined by means of a first principle calculation.

$$(Ca_{1-n}Sr_n)Si + \delta/2H_2 \longrightarrow (Ca_{1-n}Sr_n)SiH_\delta$$

Note that the first principle calculation was carried out using an electron-state calculation program in accordance with an ultra-soft pseudo potential method. The conditions were set up as hereinafter described for the electron-state calculation program.

The exchange-correlation energy term in a density functional theory was determined by applying a generalized-gradient approximation (or GGA) method thereto. Moreover, the exchange-correlation energy term was found using formula (PBE), which are set forth in a literature, "J. P. Perdew, K. Burke, and M. Ernzenhof, Phy. Rev. Lett. 77, 3865 (1996)." In addition, the cut-off energy of plane wave for developing a wave function was set at 15 hartrees, and the cut-off energy of electric-charge density and potential was set at 90 hartrees.

In order to carry out structure optimization, the Brillan region was integrated while dividing it into parts one of whose sides had a length of 0.2 Å$^{-1}$. Moreover, the occupation number of electrons was calculated using the Fermi-Dirac distribution function with energy width kRT = $3 \times 10^{-3}$ hartrees. In this process of calculation, the respective parameters were optimized to parameters for making stable structures. When finding energies in the stablest structure, the Brillan region was divided so that one of the sides had a length of 0.15 Å$^{-1}$; and the occupation number of electrons were calculated using a tetrahedron method to which a secondary correction was added. Moreover, the structural parameters were relaxed using the Breuden' s algorithm, which is set forth in a literature, "V. Eyret, J. Comput. Phys. 124, 271 (1996)," so that the force working on the respective atoms in crystal was $1 \times 10^3$ hartrees/bohr, and the macroscopic stress tensor was 0.1 GPa or less.

While taking the possibility that $(Ca_{1-n}Sr_n)$ Si reacts with hydrogen or absorbs hydrogen to turn into hydrides having various compositions, i.e., $(Ca_{1-n}Sr_n)SiH_\delta$, into consideration, that is, while taking the probability of various "$\delta$" values with respect to the value "n" in the compositional formula, $(Ca_{1-n}Sr_n) SiH_\delta$, into consideration, the heat of hydride formation $\Delta H$ was calculated, using the above-described electron-state calculation program. For example, Table 1, below summarizes the thus calculated $\Delta H$ values for hydrides whose "$\delta$" values were 1 and 2 in the compositional formula, $(Ca_{1-n}Sr_n)SiH_\delta$, whose value "n" was fixed at 0.25, and the hydrogen absorption therefor.

Note that the above-described calculation was carried out while considering the possibility that $(Ca_{1-n}Sr_n)$ Si turns into hydrides with various compositions. However, it should be noted that the calculation was not carried out for all the probable compositions expressed by the composition formula, $(Ca_{1-n}Sr_n) SiH_\delta$, that is, for every possible "$\delta$" value. Therefore, the present invention does not at all exclude the probability that $(Ca_{1-n}Sr_n)$ Si turns into hydrides other than hydrides set forth in Table 1.

TABLE 1

|  |  | $(Ca_{0.75}Sr_{0.25})$ Si | $(Ca_{0.75}Sr_{0.25})$ SiH | $(Ca_{0.75}Sr_{0.25})$ SiH$_7$ |
|---|---|---|---|---|
| Lattice, Constant | a (A) | 10.916498 | 13.059231 | 14.150337 |
|  | b (Å) | 3.914421 | 3.875076 | 3.854924 |
|  | c (Å) | 13.768305 | 12.462401 | 12.631003 |
| Volume (Å$^3$/metal atom) |  | 24.51433750 | 26.27775417 | 28.70732917 |
| Density (g/cm$^3$) |  | 2.711179 | 2.561086 | 2.373485 |
| Cohesion Energy (hartree/atom) |  | -0.1377758 | -0.1218998 | -0.1134633 |
| Crystal Structure |  | C$_{mcm}$ | C$_{mcm}$ | C$_{mcm}$ |
| Heat of Hydride Formation $\Delta H$ (kJ/mol· H$_2$) |  | Not Applicable | -36.3 | -31.0 |
| Hydrogen Absorption (% by weight) |  | Not Applicable | 1.2 | 2.4 |

It is understood from the $\Delta H$ values set forth in Table 1 that the "stablest hydride, which exhibits the smallest $\Delta H$ value (or whose absolute value of the $\Delta H$ value is the largest) and the "next stable hydride," whose $\delta$ value is larger than that of the "stablest hydride," exist in the hydrides of $(Ca_{0.75}Sr_{0.25})$ Si. Since these hydrides exhibit negative $\Delta H$ values (i.e., $\Delta H < 0$), they are generated by means of the reaction of $(Ca_{0.75}Sr_{0.25})$ Si with hydrogen. When reacting $(Ca_{0.75}Sr_{0.25})$ Si with hydrogen, the stablest hydride generates directly, without ever generating the "next stable hydride, " which is unstabler than the "stablest hydride. " That is, the "stablest hydride" generates first out of $(Ca_{0.75}Sr_{0.25})$ Si, and then the "next stable hydride" generates. Thus, $(Ca_{0.75}Sr_{0.25})$ Si is hydrogenated in two stages. Note that hydride which exhibits a positive 4H value (i.e., $\Delta H > 0$) does not react with hydrogen. For example, since $(Ca_{0.75}Sr_{0.25})$ SiH$_3$,

whose δ value is 3, exhibits a positive a positive ΔH value, no hydrogenation reaction occurs to generate $(Ca_{0.75}Sr_{0.25})$ $SiH_3$.

Specifically, the two-stage hydrogenation will be hereinafter described, using the calculated results set forth in Table 1. First of all, a first reaction to generate the stablest first hydride, $(Ca_{0.75}Sr_{0.25})$ SiH takes place as described in following equation (I) . Then, a second reaction takes place further in which the resulting $(Ca_{0.75}Sr_{0.25})$ SiH reacts with hydrogen to generate the next stable second hydride, $(Ca_{0.75}Sr_{0.25})$ $SiH_2$, under a high-pressure condition as described in following equation (II). That is, the present hydrogen storage alloy, which is expressed by a composition formula, $(Ca_{1-n}Sr_n)$ Si, absorbs hydrogen by means of the following two-stage reaction.

$$(I) \quad (Ca_{1-n}Sr_n)Si + 1/2H_2 \longrightarrow (Ca_{1-n}Sr_n)SiH;$$

and

$$(II) \quad (Ca_{1-n}Sr_n)SiH + 1/2H_2 \longrightarrow (Ca_{1-n}Sr_n)SiH_2$$

Using the above-described electron-state calculation program, the heat of hydride formation ΔH was calculated for $(Ca_{1-n}Sr_n)$ Si whose "n" value was 0.125, 0.25 and 0.5 (i.e., n = 0.125, 0.25 and 0.5), respectively, and the hydrogen absorption was calculated for the resultant hydrides, respectively. The calculated results are summarized in Table 2 along with the calculated results for CaSi, Note that the A H values were calculated for the hydrides, which the first stage reaction (I) and second stage reaction (II) of the two-stage reaction generate, respectively. Moreover, the hydrogen absorption was the hydrogen absorption after the two-stage reaction had been completed. The present hydrogen storage alloy comprises a CaSi-system hydrogen storage alloy in which Sr atoms substitute for a predetermined amount of the Ca atoms. Alternatively, the present hydrogen storage alloy comprises a CaSi-system hydrogen storage alloy in which Sr atoms substitute for a predetermined amount of the Ca atoms, and absorbs hydrogen in two stages during the hydrogen absorption.

TABLE 2

| Value "n" | Reaction | | Heat of Hydride Formation ΔH (kJ/mol · $H_2$) | Hydrogen Absorption (% by weight) |
|---|---|---|---|---|
| 0 | CaSi + 2/3$H_2$ ---> $CaSiH_{4/3}$ | | -42 | 1.9 |
| 0.125 | (I) | $(Ca_{0.875}Sr_{0.125})$ Si+1/2$H_2$--->$(Ca_{0.875}Sr_{0.125})$ SiH | -34 | 2.6 |
| | (II) | $(Ca_{0.875}SR_{0.125})$ SiH + 1/2$H_2$ ---> $(Ca_{0.875} Sr_{0.125})$ $SiH_2$ | -24 | |
| 0.25 | (T) | $(Ca_{0.75}Sr_{0.25})$Si + 1/2$H_2$ ---> $(Ca_{0.75}Sr_{0.25})$SiH | -36.3 | 2.4 |
| | (II) | $(Ca_{0.75} Sr_{0.25})$SiH + 1/2$H_2$ ---> $(Ca_{0.75}Sr_{0.25})$$SiH_2$ | -31.0 | |
| 0.5 | (I) | $(Ca_{0.5}Sr_{0.5})$Si + 1/2$H_2$ ---> $(Ca_{0.5}Sr_{0.5})$ SiH | -41 | 2.1 |
| | (II) | $(Ca_{0.5}Sr_{0.5})$ SiH + 1/2$H_2$ ---> $(Ca_{0.5} Sr_{0.5})$ $SiH_2$ | -33 | |

It is apparent from Table 2 that, when the value "n" is larger than 0 (i.e., 0 < n), the hydrogen absorption decreases and the heat of hydride formation ΔH becomes smaller(or the absolute value of ΔH becomes larger) as the substitution proportion of Sr atom (i.e., the value "n") increases. Moreover, when the value "n" is 0.5 or less (i.e., n ≦ 0.5), it is understood that the resulting present hydrogen storage alloy exhibits a greater hydrogen absorption than that of CaSi, and can absorb and discharge hydrogen at lower temperatures than CaSi does.

Specifically, when the value "n" falls in a range of 0 < n ≦ 0.5, the resulting present hydrogen storage alloy exhibits an increasing hydrogen absorption as the value "n" decreases, and can absorb hydrogen at relatively low temperatures. Moreover, when the value "n" falls in a range of $0 < n \leqq 0.25$, the resultant present hydrogen storage alloy makes a hydrogen storage alloy which is provided with a much better hydrogen absorbing-and-discharging ability. In addition, when the value "n" is 0.125 or more (i.e., $0.125 \leqq n$), the resulting present hydrogen storage alloy demonstrates the advantages, which results from the substitution of Sr atoms for Ca atoms, most remarkably.

Note that the present invention does not deny the fact that the composition of $(Ca_{1-n}Sr_n)$ Si turns into compositions other than $(Ca_{1-n}Sr_n)$ SiH and $(Ca_{1-n}Sr_n)$ SiH$_2$ by absorbing hydrogen. In any case, the present hydrogen storage alloy comprises a hydrogen storage alloy in which Sr atoms substitute for a predetermined amount of the Ca atoms of a CaSi-system hydrogen storage alloy; or comprises a CaSi-system hydrogen storage alloy in which Sr atoms substitute for a predetermined amount of the Ca atoms, and absorbs hydrogen in two stages during the hydrogen absorption.

Having now fully described the present invention, it will be apparent to one of ordinary skill in the art that many changes and modifications can be made thereto without departing from the spirit or scope of the present invention as set forth herein including the appended claims.

A hydrogen storage alloy includes a $(Ca_{1-n}Sr_n)$ Si alloy, in which the Sr atoms substitute for a part of the Ca atoms of CaSi alloy whose atomic ratio of Ca to Si is 1 : 1, and whose value "n" falls in a range of $0 < n \leqq 0.5$.

**Claims**

1.    A hydrogen storage alloy being expressed by $(Ca_{1-n}Sr_n)Si$ wherein:
     "n" falls in a range of $0 < n \leqq 0.5$.

2.    The hydrogen storage alloy set forth in claim 1, wherein "n" falls in a range of $0 < n \leqq 0.25$.

3.    The hydrogen storage alloy set forth in claim 1, wherein "n" falls in a range of $0.125 \leqq n \leqq 0.5$.

4.    The hydrogen storage alloy set forth in claim 1, wherein "n" falls in a range of $0.125 \leqq n \leqq 0.25$.

5.    The hydrogen storage alloy set forth in claim 1 absorbing hydrogen by means of a two-stage reaction, the two-stage reaction comprising:

     a first reaction of generating a first hydride by means of a reaction of the hydrogen storage alloy with hydrogen; and
     a second reaction of generating a second hydride by means of a reaction of the first hydride with hydrogen.

# Fig.1

**European Patent Office**

**EUROPEAN SEARCH REPORT**

Application Number

EP 06 12 0648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2004 176089 A (TOYOTA CENTRAL RES & DEV) 24 June 2004 (2004-06-24) * paragraphs [0001] - [0013], [0021], [0027] - [0033]; claim 6 * * abstract * | 1-5 | INV. H01M4/24 C22C28/00 |
| A | JP 2005 100876 A (TOKYO SHIBAURA ELECTRIC CO) 14 April 2005 (2005-04-14) * abstract; tables 1,2 * | 1-5 | |
| A,D | JP 10 008180 A (SANYO ELECTRIC CO) 13 January 1998 (1998-01-13) * abstract * | 1-5 | |
| A | EP 0 579 574 A1 (UNIV NANKAI [CN]) 19 January 1994 (1994-01-19) * claims 1-6 * | 1-5 | |
| A | US 4 259 110 A (PEZAT MICHEL ET AL) 31 March 1981 (1981-03-31) * claims 1-19 * | 1-5 | TECHNICAL FIELDS SEARCHED (IPC) H01M C22C |

The present search report has been drawn up for all claims

| Place of search | Date of completion of the search | Examiner |
|---|---|---|
| Munich | 9 January 2007 | Catana, Cosmin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 0648

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2007

| Patent document cited in search report | | Publication date | Patent family member(s) | | Publication date |
|---|---|---|---|---|---|
| JP 2004176089 | A | 24-06-2004 | NONE | | |
| JP 2005100876 | A | 14-04-2005 | NONE | | |
| JP 10008180 | A | 13-01-1998 | JP 3397979 | B2 | 21-04-2003 |
| EP 0579574 | A1 | 19-01-1994 | CA 2100509 | A1 | 17-01-1994 |
| | | | CN 1075380 | A | 18-08-1993 |
| | | | DE 69305017 | D1 | 31-10-1996 |
| | | | DE 69305017 | T2 | 20-02-1997 |
| | | | JP 7037589 | A | 07-02-1995 |
| | | | US 5358800 | A | 25-10-1994 |
| US 4259110 | A | 31-03-1981 | DE 2962693 | D1 | 24-06-1982 |
| | | | EP 0007840 | A1 | 06-02-1980 |
| | | | FR 2430458 | A1 | 01-02-1980 |
| | | | JP 55010497 | A | 24-01-1980 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10008180 A

- JP 2004176089 A

**Non-patent literature cited in the description**

- **J. P. PERDEW ; K. BURKE ; M. ERNZENHOF.** *Phy. Rev. Lett.,* 1996, vol. 77, 3865

- **V. EYRET.** *J. Comput. Phys.,* 1996, vol. 124, 271